(19) Europäisches Patentamt
European Patent Office
Office européen des brevets

(11) Veröffentlichungsnummer: **0 236 270**
**A2**

# (12) EUROPÄISCHE PATENTANMELDUNG

(21) Anmeldenummer: **87810101.3**

(22) Anmeldetag: **23.02.87**

(51) Int. Cl.⁴: **C 11 D 11/02**, C 11 D 17/00

(30) Priorität: **28.02.86 CH 810/86**

(43) Veröffentlichungstag der Anmeldung: **09.09.87 Patentblatt 87/37**

(84) Benannte Vertragsstaaten: **BE CH DE ES FR GB GR IT LI NL**

(71) Anmelder: **CIBA-GEIGY AG, Klybeckstrasse 141, CH-4002 Basel (CH)**

(72) Erfinder: **Balliello, Paolo, Dr., Ulrichstrasse 15, D-7888 Rheinfelden 8 (DE)**
Erfinder: **Bruttel, Beat, Dr., Ob den Reben 5, CH-4461 Böckten (CH)**
Erfinder: **Will, Hanspeter, Rebackerweg 14, CH-4402 Frenkendorf (CH)**

## (54) Verfahren zur Herstellung von eine Wirksubstanz enthaltenden Körpern und deren Verwendung als Speckles.

(57) Herstellung von Schwimmgranulaten, „Speckles" genannt, durch Sprühtrocknung und gegebenenfalls anschliessender Misch- oder Aufbaugranulierung mittels einer Lösung, die einen oder mehrere Wirkstoffe, ein Trägermaterial und ein schaumerzeugendes Mittel enthält.

EP 0 236 270 A2

0236270

CIBA-GEIGY AG
Basel (Schweiz)

1-15775/+/BSG

# Verfahren zur Herstellung von eine Wirksubstanz enthaltenden Körpern und deren Verwendung als Speckles

Die vorliegende Erfindung betrifft ein Verfahren zur Herstellung von eine Wirksubstanz enthaltenden Körpern und deren Verwendung als "Speckles" zum Behandeln von Substraten.

Uebliche "Speckles", z.B. solche die während des Waschprozesses in wässrigem Medium zum Bleichen von Substraten verwendet werden, besitzen die Eigenschaft, sich während einer solchen Behandlung auf den Substraten abzulagern. Diese Erscheinung bewirkt dann meistens eine punktweise stark variierende Konzentration von Wirkstoff auf dem Substrat, was einer unegalen Behandlung dieser Substrate gleichkommt.

Es wurde nun gefunden, dass sich durch eine bestimmte Formulierung sowie Verfahrenstechnische Massnahmen, Körper mit definierten physikalischen Eigenschaften erhalten lassen, welche auf der wässrigen Flotte schwimmen und währenddessen die in ihnen enthaltenen Wirksubstanzen gleichmässig aus der Oberfläche der Flüssigphase an die Flotte abgeben. Auf diese Weise wird unabhängig von der Bewegung der Flotte erfindungsgemäss eine egale Behandlung der Substrate gewährleistet, da es nun zu keinen, auf kleine Teilbereiche begrenzte Reaktionen oder Aufziehen des Wirkstoffs mit den bzw. auf die Substrate mehr kommen kann.

Gegenstand der vorliegenden Anmeldung ist somit ein Verfahren zur Herstellung von auf Wasser schwimmenden, sich benetzenden und auflösenden Körpern die eine Wirksubstanz enthalten, dadurch gekennzeichnet, dass man eine wässrige Lösung, die die Wirksubstanz, ein Trägermaterial und ein schaumerzeugendes Mittel enthält, einer Sprühtrocknung unterzieht. Das feinstporöse so erhaltene Trockengut wird anschliessend einem Granulierprozess zugeführt, z.B. unter Aufdüsung einer opportunen wässrigen Lösung, die die Wirksubstanz und das Trägermaterial enthält.

Ein weiterer Gegenstand der vorliegenden Erfindung ist neben den erfindungsgemäss erhaltenen Körpern auch die Verwendung dieser als "Speckles" zum Behandeln von Substraten.

Beispiele für Wirksubstanzen sind: Photoaktivatoren, insbesondere Phthalocyanine die beispielsweise beschrieben sind in: US-A-3,927,967, US-A-4,094,806, EP-A-3,149, EP-A-3,371, EP-A-54,992, US-A-4,166,718, EP-A-47,716 und EP-A-81,462.

Diese dienen als Bleichmittel und besonders bevorzugte Photoaktivatoren, die in erfindungsgemässen Speckles enthalten sein können, entsprechen der Formel

$$\left[\text{MePc}\right]\begin{matrix}-R_x\\ -(SO_3Y)_v\end{matrix} \quad ,$$

worin MePc für das Zink- oder Aluminiumphthalocyaninringsystem steht, Y Wasserstoff, ein Alkalimetall oder Ammonium, v eine beliebige Zahl zwischen 1 und 4, R Fluor, Chlor, Brom oder Jod, vorzugsweise Chlor, und x eine beliebige Zahl von 0 bis 8 bedeuten.

In praktisch besonders wichtigen Photoaktivatoren der obigen Formel bedeutet Y Wasserstoff oder Natrium, v eine beliebige Zahl von 2,5 bis 4, und x 0 oder eine beliebige Zahl von 0,5 bis 1,5.

Weitere, erfindungsgemäss verwendbare Wirksubstanzen sind: Chlor freisetzende Verbindungen, wie Di- oder Triisocyanurate, Chlorite, sowie Bleichaktivatoren, wie N,N,N'N'-Tetraacetyläthylendiamin, N-Acetylimidazol, N-Benzoylimidazol, N,N,N'N'-Tetraacetylglykolurid, Pentaacetylglykol, Alkoxybenzolsulfonate und insbesondere Nonyloxybenzolsulfonat und Chloralkoxybenzolsulfonate.

Als Wirksubstanzen kommen des weiteren in Frage Enzyme, Farbstoffe wie z.B. Direktfarbstoffe beispielsweise Acid Blue 91, 80, 125 S, 127 S, 185, 225 aber auch Acid Violet 109 Pigmente (wie Ultramarin Blau), und optische Aufheller. Auch Mischungen dieser Wirksubstanzen sind möglich.

Mit den erfindungsgemässen Speckles können die verschiedensten Substrate behandelt werden. Beispielsweise kommen cellulosehaltige Fasermaterialien, wie Baumwolle und regenerierte Cellulose, ferner auch Wolle, Seide und Mischgewebe in Betracht.

Als Trägermaterialien können übliche Dispergatoren, z.B. Kondensationsprodukte von Naphthalinsulfonsäuren mit Formaldehyd oder Kresolen, eingesetzt werden; desweiteren auch übliche Alkyl, Alkil-Anil, Anilsulfonsäuren und starkschäummende Tenside wie z.B. die im folgenden beschriebenen oberflächenaktiven Verbindungen.

Als schaumerzeugende Mittel können bekannte oberflächenaktive Verbindungen verwendet werden. Beispielsweise seien wasserlösliche Alkylbenzolsulfonate, Alkylsulfate, äthoxylierte Alkyläthersulfate, Paraffinsulfonate, α-Olefinsulfonate, α-Sulfocarbonsäuren, deren Salze und Ester, Alkylglyceryläthersulfonate, Fettsäuremonoglyceridsulfate oder -sulfonate, Alkylphenolpolyäthoxy-äthersulfate, 2-Acyloxyalkansulfonate, β-Alkyloxyalkansulfonate, Seifen, äthoxylierte Fettalkohole, Alkylphenole, Polypropoxyglykole, Polypropoxyäthylendiamine, Aminoxide, Phosphinoxide, Sulfoxide, aliphatische sekundäre und tertiäre Amine, aliphatische quaternäre Ammonium-, Phosphonium- und Sulfoniumverbindungen amphotere Tenside und Derivate (z.B. Betaine) oder Mischungen dieser Verbindungen genannt.

In einer bevorzugten Ausführungsform des erfindungsgemässen Verfahrens wird eine Lösung, die 0,005-10, insbesondere 0,02-1 Gew.% Wirksubstanz, 1-99, insbesondere 1-10 Gew.% schaumerzeugendes Mittel und 1-99, insbesondere 10-99 Gew.% Trägermaterial enthält, einer Sprühtrocknung unterzogen.

Die Sprühtrocknung kann in hierfür geeigneten Trocknern ausgeführt werden, wobei die Einlufttemperatur je nach thermischer Beanspruchung der eingesetzten Mischung in weiten Grenzen ausgewählt werden muss. Vorzugsweise bewegt sich die Einlufttemperatur in einem Bereich von 100-450, insbesondere 120-250°C, während die Ablufttemperatur in der Regel zwischen 80 und 115, insbesondere bei 100-110°C, liegt.

Anschliessend wird das sprühgetrocknete Material einer Misch- oder Aufbaugranulierung, mit einer wässrigen Lösung, die die Wirksubstanz und das Trägermaterial enthält unterworfen.

Wenn es die Lichtempfindlichkeit der verwendeten Wirksubstanz erfordert, sollten in der aufzusprühenden Lösung Lichtschutzmittel mitverwendet werden, um die Lichtstabilität der Speckles zu sichern.

Vorzugsweise enthält dieses zum anschliessenden Granulierungsprozess verwendete wässrige System 0,01-20 Gew.% Wirksubstanz und 1-60 Gew.% Trägermaterial.

Geeignete Vorrichtungen zur Erhaltung des erforderlichen Kornes bzw. zur Misch- oder Aufbaugranulierung sind z.B. Sprühtrockner, Wirbelschichttrockner, sowie Roll-, Trommel-, Mischer- und Wirbelschichtgranulatoren sowie Pelletierteller, die im erfindungsgemässen Verfahren vorzugsweise bei Raumtemperatur, d.h. in der Regel zwischen 15 und 25°C, betrieben werden.

In einer besonderen Ausführungsform wird das sprühgetrocknete Material auf einem Pelletierteller vorgelegt und bei Raumtemperatur mit einer wässrigen Lösung, die 0,1-20 Gew.% Wirksubstanz und 10-60 Gew.% Trägermaterial enthält, besprüht.

Die erfindungsgemäss herstellbaren Körper werden somit in zwei Schritten hergestellt, wobei sich nach der Sprühtrocknung ein Granulierprozess anschliesst; es ist aber auch eine einstufige Arbeitsweise möglich vor allem wenn als schaumerzeugende Mittel rasch lösliche Hilfsmittel gewählt werden wie beispielsweise Polyvinylpyrolidon, Polyäthylenglykol gegebenenfalls in Kombinationen mit Oxyligninsulfonaten und/oder Naphthalinsulfonaten, indem auf einem dem Sprühtrockner nachgeschalteten Wirbelbett bzw. in einem Durchlaufmischer eine die optimalen Benetzungs-/Schwimmeigenschaften unterstützende wässrige Lösung enthaltend Wirksubstanz und Trägermaterial aufgedüst wird.

Nach der Sprühtrocknung, bzw. nach dem Granulierprozess schliesst sich vorzugsweise die Abtrennung unerwünschter Kornfraktionen von den erhaltenen Körpern an. Diese unerwünschte Kornfraktion besteht aus den Anteilen mit einem mittleren Durchmesser ausserhalb vom Feld von 0,5-1,0 mm das für brauchbare Speckles vorzugsweise ausgewählt bleibt.

Bei den einstufig hergestellten Körpern ist die Feingut- oder Staubabtrennung und die Grobkornabtrennung besonders wichtig. Die entstehenden Teilströme können kontinuierlich in die Eindampfsuspension oder in das Trocknungsaggregat rückgeführt werden.

Die so erhaltenen Körper erfüllen die an sie gestellten Anforderungen in hohem Masse und können als Speckles verwendet werden. Sie schwimmen auf der Oberfläche der wässrigen Flotten z.B. Waschflotten und ermöglichen gleichzeitig die Freisetzung der in ihnen enthaltenen Wirkstoffe. Diese können sich gleichmässig aus der Wasseroberfläche zur Flotte verteilen und konzentrationshomogen die

Substrate erlangen und darauf einwirken. Auf diese Weise wird optimal eine egale Aufnahme der Wirksubstanzen von den Substraten erzielt.

Die Restfeuchte der erfindungsgemäss hergestellten Speckles soll im Bereich von 0-20 % vorzugsweise im Bereich von 5-20 Gew.% liegen. Durch Wahl bestimmter Trocknungsparameter sowie Auswahl der Gewichtsverhältnisse von Feingut zu Granulierlösung im zweiten Verfahrensschritt lässt sich dieser Bereich einstellen.

Das Schüttgewicht der Speckles liegt im Bereich von 50-500, insbesondere 200-350 g/l.

Die nachfolgenden Beispiele erläutern die Erfindung ohne sie darauf zu beschränken.

Beispiel 1: Herstellung von Schwimmspeckles, die als Wirksubstanz einen Photoaktivator enthalten.

In einem 200 l-Behälter wurden
0,100 kg sulfoniertes Aluminiumphthalocyanin
75,000 kg eines Naphthalinsulfonsäure-Formaldehyd-Kondensationsproduktes und
0,381 kg Dodecylbenzolsulfonsäure (Natriumsalz)
in 100 l Wasser angeschlämmt und beschäumt. Das angeschlämmte Gut wurde anschliessend in einem Düsensprühturm sprühgetrocknet, wobei die Einlufttemperatur 190°C und die Ablufttemperatur 110°C betrug.

Das sprühgetrocknete Material wurde dann auf einem Pelletierteller vorgelegt und unter Aufdüsung (5 l/h bei 5 bar) einer wässrigen Lösung, die 1,834 kg Rückführungsmaterial bzw. Feingut (s.u.) und 0,022 kg Unisperseblau BE (C.I. Nr. 74160) in 1,8 l Wasser enthält, bei Raumtemperatur granuliert.

Die so erhaltenen Speckles, die im wesentlichen eine Partikelgrösse von 0,5-1 mm aufwiesen, wurden durch Siebung vom Feingut (Unterkorn) getrennt. Dieses Feingut führte man in die Granulierstufe zurück. (Es ist aber auch möglich, den Sprühturm mit Feingut zu beschicken.)

Die Restfeuchte der Speckles betrug 9 % und das Schüttgewicht belief sich auf 350 g/l.

Beispiel 2: In einem Plastikbecher wurde 1 l Wasser von 35°C vorgelegt. Eine 50 g schwere Baumwoll-Gewebebande, handorgelförmig zusammengelegt, wurde so eingetaucht, dass noch 2,5 cm der Flotte über dem Gewebe standen. Wenn die Flottentemperatur 30°C erreicht hatte, wurden 5 g eines Basiswaschpulvers, das 3 Gew.% Speckles gemäss Beispiel 1 enthält, auf die Flotte gestreut. Nach 1 Minute wurde das Gewebe leicht in der Flotte bewegt, gespült und bei 60°C im Dunkeln getrocknet.

Das hier verwendete Basiswaschpulver hatte die folgende Zusammensetzung:

| | | |
|---|---|---|
| 10,8 | Gew.% | Dodecylbenzolsulfonsäure (Natriumsalz) |
| 2,2 | Gew.% | Tensid |
| 3,0 | Gew.% | Natriumseife |
| 30,0 | Gew.% | Natriumtripolyphosphat |
| 5,5 | Gew.% | Natriumsilikat |
| 1,6 | Gew.% | Carboxymethylcellulose |
| 0,2 | Gew.% | EDTA |
| 37,0 | Gew.% | Natriumsulfat |
| 0,1 | Gew.% | optischer Aufheller |
| 0,02 | Gew.% | Geruchsstoff |
| 9,58 | Gew.% | Wasser. |

Es zeigte sich, dass, das im mit dem die erfindungsgemässen Speckles enthaltenden Waschpulver gewaschene Gewebe gleichmässig eine schöne Weissnuance aufwies, währenddem die identische Behandlung mit einem, die gleiche Konzentration an sulfoniertem Aluminiumphthalocyanin

enthaltenden Waschpulver, jedoch in Form von üblichen Speckles, d.h. hier z.B. auf Basis von Kochsalz, zu starke fleckenartige, unegale blaue Verfärbungen führt.

Beispiel 3: Verfährt man wie im Beispiel 2, verwendet jedoch anstelle der Baumwoll-Gewebebande ein mit Rotwein beschmutztes Baumwollgewebe (Standard Testgewebe EMPA Nr. 114), hängt es nach dem Spülen zum Trocknen an die Leine und setzt es während 3 Stunden der Sonne aus, so erhält man ein Testgewebe das gleichmässig gebleicht werden konnte.

Patentansprüche

1. Verfahren zur Herstellung von in Wasser sich benetzenden schwimmenden und in diesem Zustand sich auflösenden Körper, enthaltend einen oder mehrere Wirkstoffe, dadurch gekennzeichnet, dass man eine wässrige Lösung, die den Wirkstoff, ein Trägermaterial und ein schaumerzeugendes Mittel enthält, einer Sprühtrocknung unterwirft und das so erhaltene Material gegebenfalls einem Granulierprozess unter Aufdüsung einer wässrigen Lösung, die den Wirkstoff und einen Träger enthält, unterwirft.

2. Verfahren nach Anspruch 1, dadurch gekennzeichnet, dass man als Wirkstoff ein Bleichmittel verwendet.

3. Verfahren nach Anspruch 2 dadurch gekennzeichnet, dass das Bleichmittel, ein Bleichaktivator, ein Photoaktivator, ein Chlorit oder eine Chlor freisetzende Verbindung ist.

4. Verfahren nach Anspruch 1 dadurch gekennzeichnet dass man als Wirkstoff einen Farbstoff oder einen optischen Aufheller, verwendet.

5. Verfahren nach Anspruch 4, dadurch gekennzeichnet, dass man als Farbstoff einen Direktfarbstoff verwendet.

6. Verfahren nach Anspruch 4, dadurch gekennzeichnet, dass man als Wirkstoff ein sehr fein verteiltes Pigment verwendet.

7. Verfahren nach Anspruch 3, dadurch gekennzeichnet, dass man als Chlor freisetzende Verbindung Di- oder Triisocyanurate verwendet.

8. Verfahren nach Anspruch 3, dadurch gekennzeichnet, dass man als Bleichaktivator N,N,N'N'-Tetraacetyläthylendiamin, N-Acetylimidazol, N-Benzoylimidazol, N,N,N',N'-Tetraacetylglykoluril, Pentaacetylglykol, Alkoxybenzolsulfonate, insbesondere Nonyloxybenzolsulfonat, und Chloralkoxybenzolsulfonate verwendet.

9. Verfahren nach Anspruch 1, dadurch gekennzeichnet, dass man als Wirkstoff einen Photoaktivator der Formel

$$\left[\text{MePc}\right]\begin{matrix}-R_x\\ -(SO_3Y)_v\end{matrix}$$

verwendet, worin MePc für das Zink- oder Aluminiumphthalocyaninringsystem steht, Y Wasserstoff, ein Alkalimetall oder Ammonium, v eine beliebige Zahl zwischen 1 und 4, R Fluor, Chlor, Brom oder Jod, vorzugsweise Chlor, und x eine beliebige Zahl von 0 bis 8 bedeuten.

10. Verfahren nach Anspruch 1, dadurch gekennzeichnet, dass man als Wirkstoff eine Kombination von zwei oder mehreren gemäss Ansprüche 1 bis 9 definierten Wirkstoffen verwendet.

11. Verfahren nach Anspruch 1, dadurch gekennzeichnet, dass man als Träger ein Kondensationsprodukt der Naphthalinsulfonsäure (Natriumsalz) verwendet.

12. Verfahren nach Anspruch 1, dadurch gekennzeichnet, dass man als schaumerzeugendes Mittel wasserlösliche Alkylbenzolsulfonate, Alkylsulfate, äthoxylierte Alkyläthersulfate, Paraffinsulfonate, α-Olefinsulfonate, α-Sulfocarbonsäuren, deren Salze und Ester, Alkylglyceryläthersulfonate, Fettsäuremonoglyceridsulfate oder -sulfonate, Alkylphenolpolyäthoxy-äthersulfate, 2-Acyloxyalkansulfonate, β-Alkyloxyalkansulfonate, Seifen, äthoxylierte Fettalkohole, Alkylphenole, Polypropoxyglykole, Polypropoxy-äthylendiamine, Aminoxide, Phosphinoxide, Sulfoxide, aliphatische sekundäre und tertiäre Amine, aliphatische quaternäre Ammonium-, Phosphonium- und Sulfoniumverbindungen amphotere Tenside oder Mischungen dieser Verbindungen verwendet.

13. Verfahren nach Anspruch 1, dadurch gekennzeichnet, dass die zur Sprühtrocknung kommende Lösung 0,005-10 Gew.% Wirksubstanz, 1-99 Gew.% schaumerzeugendes Mittel und 1-99 Gew.% Trägermaterial enthält.

14. Verfahren nach Anspruch 13, dadurch gekennzeichnet, dass die zur Sprühtrocknung kommende Lösung 0,02-1 Gew.% Wirksubstanz, 10-99 Gew.% Trägermaterial und 1-10 Gew.% schaumerzeugendes Mittel enthält.

15. Verfahren nach Anspruch 1, dadurch gekennzeichnet, dass bei der Sprühtrocknung die Einlufttemperatur 100-450°C und die Ablufttemperatur 80-115°C beträgt.

16. Verfahren nach Anspruch 1, dadurch gekennzeichnet, dass das zur Misch- oder Aufbaugranulierung verwendete wässrige System 0,01-20 Gew.% Wirksubstanz und 1-60 Gew.% Trägermaterial enthält.

17. Verfahren nach Anspruch 16, dadurch gekennzeichnet, dass die Misch- oder Aufbaugranulierung auf einem Granuliergerät unter Aufdüsung einer Lösung, die 0,1-20 Gew.% Wirksubstanz und 10-60 Gew.% Trägermaterial, enthält, bei Raumtemperatur durchgeführt wird.

18. Verfahren nach Anspruch 17, dadurch gekennzeichnet, dass die erhaltenen Körper eine Restfeuchte von 5-20 Gew.% und ein Schüttgewicht von 200-350 g/l aufweisen.

19. Die nach dem Verfahren nach Anspruch 1 erhaltenen Körper.

20. Verwendung der Körper erhalten nach Anspruch 1 als Speckles zum Behandeln von Substraten.

21. Verwendung der Speckles nach Anspruch 20 in Waschpulvern.

22. Waschpulver, enthaltend 1-10 Gew.% Speckles nach Anspruch 20.

FO 7.1 DOE/we*/eg*